# EUROPEAN PATENT SPECIFICATION

(11) **EP 3 482 988 B1**
(45) Date of publication and mention of the grant of the patent: **27.04.2022**
(21) Application number: 17823911.7
(22) Date of filing: 01.06.2017
(51) Int. Cl.: B60K 11/04, B60K 5/00, B62D 25/20, F02M 35/10, F02M 35/16, B60K 13/06, B60K 11/08

(54) **VEHICLE**
FAHRZEUG
VÉHICULE

(30) Priority: 08.07.2016 JP 2016136455
(43) Date of publication of application: 15.05.2019
(73) Proprietor: Yamaha Motor Power Products Kabushiki Kaisha, Kakegawa-shi Shizuoka 436-0084 (JP)
(72) Inventor: YAMAMOTO, Keisuke, Kakegawa-shi Shizuoka 436-0084 (JP); ATAKA, Yoshio, Kakegawa-shi Shizuoka 436-0084 (JP); ITO, Takeshi, Kakegawa-shi Shizuoka 436-0084 (JP); TONOOKA, Yoshiki, Kakegawa-shi Shizuoka 436-0084 (JP)
(74) Representative: Zimmermann, Tankred Klaus
(86) International application number: PCT/JP2017/020505
(87) International publication number: WO 2018/008304

(56) References cited:
- JP-A- H04 356 225
- JP-A- 2001 310 769
- JP-A- 2008 044 551
- JP-A- 2015 101 162
- US-A1- 2004 195 797
- US-A1- 2008 289 896
- US-A1- 2009 302 590
- US-A1- 2010 194 086

## Description

### TECHNICAL FIELD

The present invention relates to vehicles, and more specifically to a vehicle including an engine.

### BACKGROUND ART

Patent Literatures 1 and 2 disclose examples of conventional technique in this field.

Patent Literature 1 discloses an off-road four-wheel vehicle engine-room cooling structure: An off-road four-wheel vehicle includes a cabin, which houses an operation section and a seat, between a left-and-right pair of front wheels and a left-and-right pair of rear wheels; and an engine room inside the cabin or at a place more rearward than the cabin. The engine room covers at least ahead and above the engine. The disclosed engine room cooling structure includes an air duct which extends forward from the engine room to introduce engine room cooling air into the engine room. The air duct is routed under a floor plate, and an under guard is provided at least below a rear portion of the air duct.

Patent Literature 2 discloses an engine room ventilation structure: A vehicle has an engine room under a front floor; the vehicle has a storage room at its front end portion, where a spare tire carrier is disposed; the spare tire carrier is hollow, to form an air path from a front surface of the vehicle to the engine room. The air path is routed under the front floor; an exit of the air path is located under the front floor; and an undercover is provided at least below the exit of the air path.

### CITATION LIST

### PATENT LITERATURE

Patent Literature 1: JP-A 2008-44551
Patent Literature 2: JP-A H8-268087

### SUMMARY OF THE INVENTION

### TECHNICAL PROBLEM

As described, in Patent Literature 1, an air duct to introduce cooling air into the engine room and an under guard to protect the air duct are required separately. Likewise, in Patent Literature 2, an air path to the engine room and an undercover to protect the air path are required separately. Either case requires an increased number of parts.

Therefore, a primary object of the present invention is to provide a vehicle in which external air can be introduced with a reduced number of parts.

### SOLUTION TO PROBLEM

According to the present invention, a vehicle is provided as defined in claim 1.

According to the present invention, external air is introduced from the opening of the panel main body, flows through the groove portion which serves as an external air introducing path, and is supplied into the shroud. In this arrangement, the opening and the groove portion are formed in the panel main body of the floor panel. In other words, the floor panel itself has an external air introducing path. Therefore, there is no need for preparing a separate external air introducing path provided by an individual member separate from the floor panel. Also, the groove portion is made by forming the floor panel so that the panel main body has a downward recess in its upper surface, namely, so that the recess opens in the upper surface, not in the lower surface. Since the floor panel itself protects members which are placed thereabove, there is no need for protection members below the groove portion to protect the external air introducing path (the groove portion). Therefore, it is possible to introduce external air with a reduced number of parts.

Preferably, the panel main body includes a first panel portion extending in the fore-aft direction between the front wheel and the rear wheel; and a second panel portion located behind the front wheel and extending upward from a front end region of the first panel portion; the opening is located in the second panel portion; and the groove portion communicates with the opening and is continuous from the second panel portion to the first panel portion. By making the opening in the second panel portion which is formed to rise upward as described, it becomes possible to efficiently introduce running wind as the external air from ahead of the vehicle into the groove portion.

Preferably, the vehicle further includes a lid portion which covers the groove portion. By covering the groove portion with the lid portion as described above, it becomes possible to introduce the external air which flows through the groove portion, more reliably toward the rear, thereby supplying the air easily into the shroud.

Preferably, the groove portion further has a side surface provided with the opening. In this case, since the opening is made in the side surface of the groove portion, it is possible to reduce the entry of mud, sand, stones and other foreign matter into the opening and then into the groove portion when they come flying from ahead of the vehicle to the front face of the floor panel.

Preferably, the vehicle further includes a cover portion provided ahead of the opening. By providing the cover portion ahead of the opening as described, it becomes possible to further reduce the entry of mud, sand, stones and other foreign matter into the opening and then into the groove portion when they come flying from ahead of the vehicle to the front face of the floor panel.

Preferably, the vehicle further includes a fan for supplying the external air from the groove portion into the shroud. In this case, the external air from the groove portion is supplied into the shroud efficiently and smoothly by the fan.

Preferably, the vehicle further includes a muffler supplied with exhaust gas from the engine; and a muffler cover which covers the muffler and communicates with the shroud, and with the above, the muffler is located adjacent to the engine. By positioning the muffler next to the engine as described, it becomes possible to shorten the length of an exhaust pipe which allows the exhaust gas to move from the engine to the muffler. Further, by connecting the muffler cover which covers the muffler to the shroud, the arrangement allows the external air to flow through the groove portion to reach also the inside of the muffler cover. Therefore, it is possible to cool not only the engine but also the muffler.

Preferably, the groove portion allows the external air to be supplied also into the engine. In this case, the external air flows through the groove portion and is supplied not only into the shroud but also into the engine. Therefore, there is no need for separately providing an air intake path for supplying air into the engine.

Preferably, the vehicle further includes an air intake duct that faces the groove portion for introduction of the external air from the groove portion; and an air cleaner provided between the air intake duct and the engine for cleaning the external air from the air intake duct before supplying into the engine. By positioning the air intake duct to face the groove portion as described, the external air from the groove portion is introduced to the air cleaner efficiently via the air intake duct, and after being cleaned by the air cleaner, the external air is supplied smoothly into the engine.

### ADVANTAGEOUS EFFECT OF INVENTION

According to the present invention, it is possible to introduce external air with a reduced number of parts.

### BRIEF DESCRIPTION OF DRAWINGS

Fig. 1 is a side view (taken from left) showing a golf car or golf cart according to an embodiment of the present invention.
Fig. 2 is a rear perspective view showing the golf car according to the embodiment of the present invention.
Fig. 3 is a rear perspective view showing primary part of a frame portion.
Fig. 4 is a rear perspective view showing part of the frame portion, a transmission and their surroundings.
Fig. 5 is a rear perspective view showing primary part of the frame portion and a front cover portion.
Fig. 6 is a perspective view showing the frame portion and its surroundings.
Fig. 7 is a perspective view showing the frame portion, an undercover and their surroundings.
Fig. 8 is a rear perspective view showing the frame portion, a floor panel, and so on.
Fig. 9 is a plan view showing the frame portion, the floor panel, and so on.
Fig. 10(a) is an enlarged view showing an opening; Fig. 10(b) is an enlarged view showing a platy member; and Fig. 10(c) is an enlarged view showing a cover portion.
Fig. 11 is a front perspective view showing primary part of the golf car.
Fig. 12 is a front perspective view showing primary part of the golf car.
Fig. 13 is a rear perspective view showing primary part of the golf car.
Fig. 14 is a plan view showing primary part of the golf car.
Fig. 15 is a side view (taken from left) showing the frame portion, the floor panel, and so on.
Fig. 16 is a side view (taken from right) showing the frame portion, a groove portion and so on, in a state where part of the floor panel on a more right side than the groove portion is removed.
Fig. 17 is a front view with a partial section taken along a line A-A in Fig. 15 to show an engine, a muffler and their surroundings.
Fig. 18 is a plan view with a partial section taken along a line B-B in Fig. 15 to show the engine, the muffler and their surroundings.
Fig. 19 is a plan view showing the engine, a muffler cover and their surroundings.
Fig. 20 is a front perspective view showing the engine, the muffler cover and their surroundings.
Fig. 21 is a rear perspective view showing the engine, the muffler cover and their surroundings.
Fig. 22(a) is a front view with a partial section taken along a line C-C in Fig. 14 to show a fuel tank; Fig. 22(b) is a front view with a partial section, which shows the fuel tank and its surroundings.

### DESCRIPTION OF EMBODIMENTS

Hereinafter, an embodiment of the present invention will be described with reference to the drawings. Herein, description will be made for a case where the present invention is applied to a golf car 10 as an example of a vehicle. It is noted that the terms front and rear, right and left, up and down as used in the following description are determined from the golf car driver's position on a seat portion 18 of the golf car 10, with the driver facing toward a steering wheel 30.

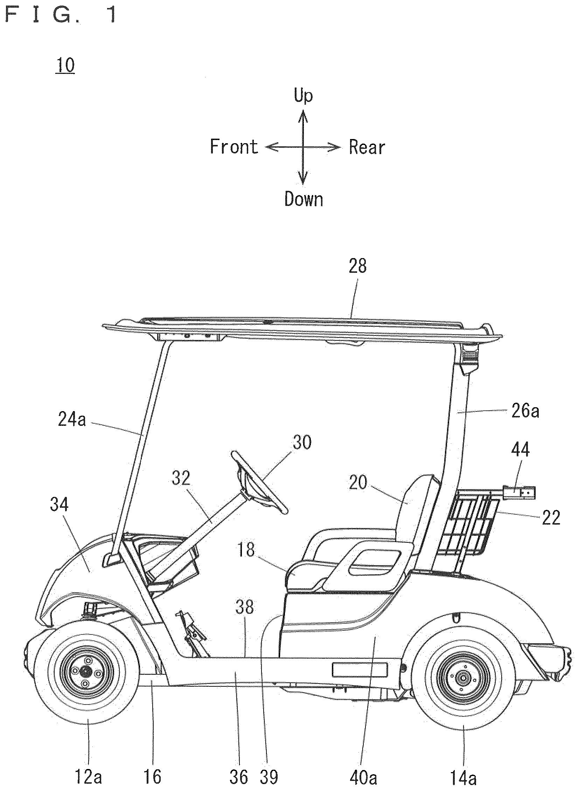

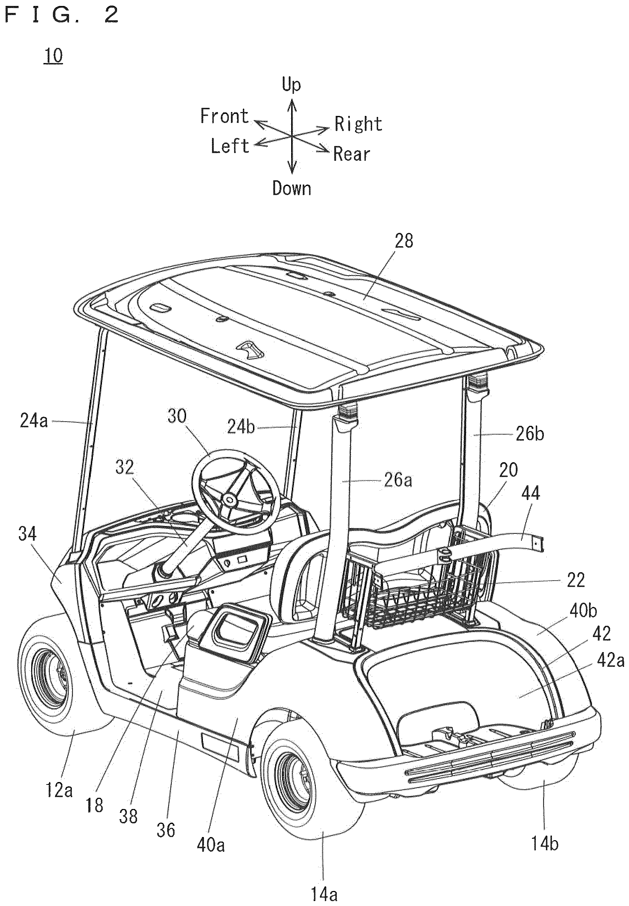

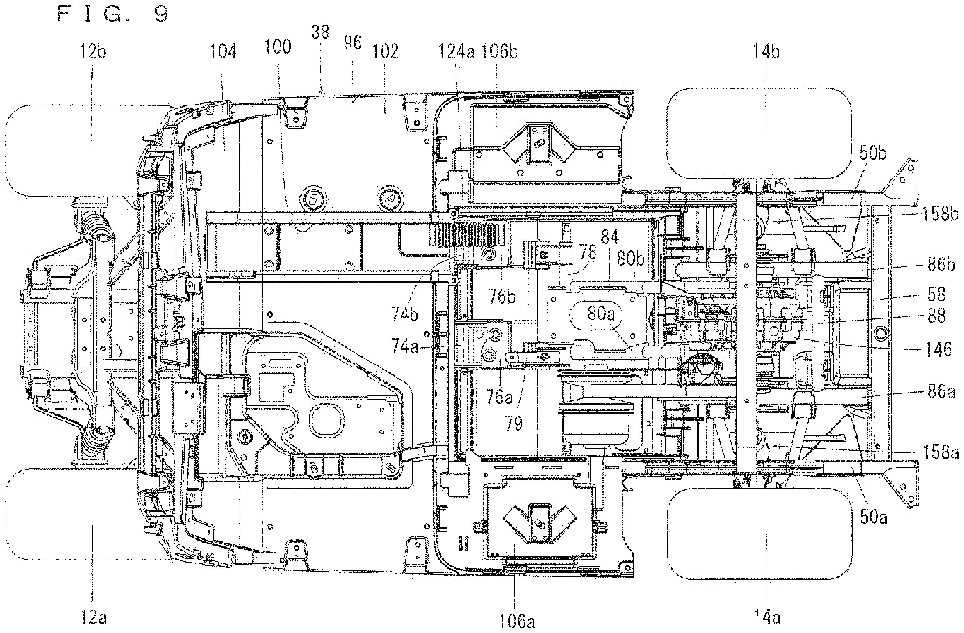

Referring to Fig. 1 and Fig. 2, the golf car 10 is a two-person golf car, and includes a pair of front wheels 12a, 12b (see Fig. 9), a pair of rear wheels 14a, 14b and a frame portion 16. The pair of rear wheels 14a, 14b are at located more rearward positions than the pair of front wheels 12a, 12b. The pair of front wheels 12a, 12b are supported rotatably at a front region of the frame portion 16. The pair of rear wheels 14a, 14b are supported rotatably at a rear region of the frame portion 16.

The seat portion 18 extends in a width direction of the golf car 10 at a more rearward position than the pair of front wheels 12a, 12b, but at a more forward position than the pair of rear wheels 14a, 14b. The seat portion 18 is supported by a seat rail 72 (which will be described later) of the frame portion 16. A seat back 20 is provided at an obliquely upward and rearward position of the seat portion 18. A basket 22 for accommodating baggage is provided behind the seat back 20. The seat back 20 and the basket 22 are supported by rear pillars 26a, 26b which will be described later.

A pair of front pillars 24a, 24b is provided at more forward positions than the seat portion 18, whereas a pair of rear pillars 26a, 26b is provided at more rearward positions than the seat portion 18. The front pillars 24a, 24b and the rear pillars 26a, 26b are supported by the frame portion 16 at their lower end portions. The front pillars 24a, 24b and the rear pillars 26a, 26b extend from below to above while tilting slightly rearward. A roof portion 28 covers above the seat portion 18, and is supported by the front pillars 24a, 24b and the rear pillars 26a, 26b.

A steering wheel 30 is located ahead of the seat back 20. The steering wheel 30 is connected to the front wheels 12a, 12b via a steering shaft 32 and an unillustrated connection mechanism.

The frame portion 16 is covered with a cowl 34, a pair of side protectors 36, a floor panel 38, a body panel 39, a pair of rear fender covers 40a, 40b and a rear floor cover 42, each made of a resin, for example. The cowl 34 covers the front region of the frame portion 16 and above the front wheels 12a, 12b. The pair of side protectors 36 covers an intermediate region of the frame portion 16 from two sides. The floor panel 38, which functions as a footrest for the driver and the passenger sitting on the seat portion 18 to rest their feet, provides a bottom portion of a cabin space of the golf car 10. The body panel 39 covers a front region below the seat portion 18. The pair of rear fender covers 40a, 40b cover two sides below the seat portion 18 and above the pair of rear wheels 14a, 14b. The rear floor cover 42 is sandwiched by rear end portions of the pair of rear fender covers 40a, 40b, and has a concave portion 42a for placement of golf bags, for example. By only removing the rear floor cover 42, it becomes possible to easily maintain a CVT (Continuously Variable Transmission) 144 (which will be described later) and a transmission 146 (which will be described later). At a position above the concave portion 42a and behind the basket 22, there is provided a holding portion 44 for holding the golf bags. The holding portion 44 is supported by connecting members 70a, 70b (which will be described later).

Next, description will cover a structure of the frame portion 16 and its surroundings.

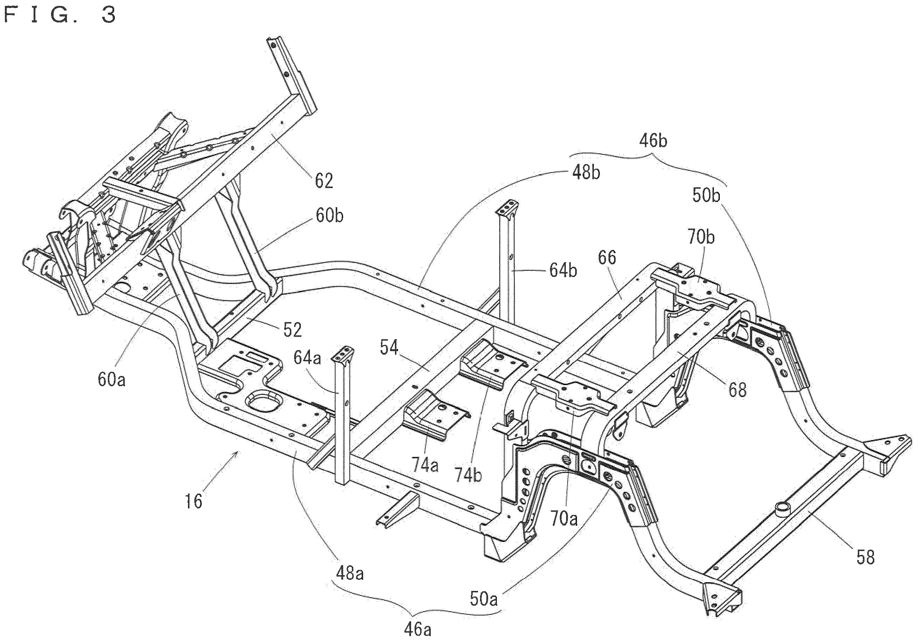

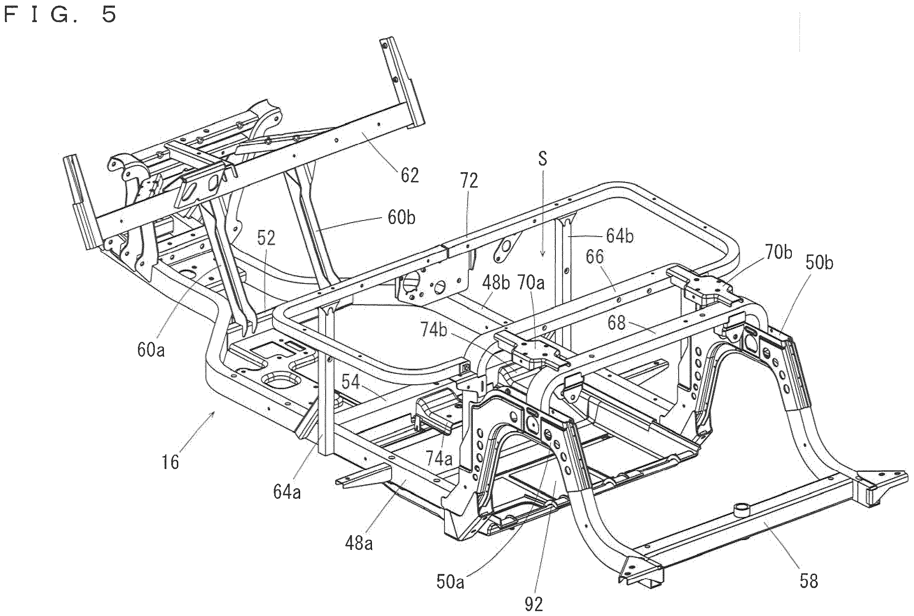

Referring to Fig. 3 through Fig. 7, the frame portion 16 includes a pair of main frames 46a, 46b which are spaced apart from each other in a width direction of the vehicle and extend in a fore-aft direction of the vehicle; cross members 52, 54, 56, 58, and a pair of support frames 60a, 60b. The pair of main frames 46a, 46b respectively include front frames 48a, 48b extending in the fore-aft direction; and rear frames 50a, 50b extending rearward from rear end portions of the respective front frames 48a, 48b. The pair of front frames 48a, 48b is formed so that their front end portions have a narrower space from each other than their rear end portions do. The pair of rear frames 50a, 50b is curved to project upward.

The front frames 48a, 48b are connected to each other by the cross members 52, 54. A portion where the front frame 48a and the rear frame 50a are joined to each other and a portion where the front frame 48b and the rear frame 50b are joined to each other are connected to each other by the cross member 56. The rear frames 50a, 50b have their rear end portions connected to each other by the cross member 58. In other words, the main frames 46a, 46b are connected to each other by the cross members 52, 54, 56, 58 which extend in the vehicle's width direction. The cross members 52, 54, 56, 58 are spaced apart from each other in the vehicle's fore-aft direction, and are disposed in this order from the front to the rear of the vehicle. The cross member 52 is joined to the pair of support frames 60a, 60b which extend obliquely forward.

The pair of support frames 60a, 60b have their front end portions support a cross member 62 which extends in the vehicle's width direction. Near the cross member 54 in the pair of front frames 48a, 48b, a pair of support frames 64a, 64b which extend upward are joined. Also, the pair of rear frames 50a, 50b has their front portions connected to each other by a connection frame 66. The pair of rear frames 50a, 50b has their intermediate regions connected to each other by a connection frame 68. The connection frame 66 extends in the vehicle's width direction, with its two end portions extending downward, to provide an upward projecting substantially U shape. The connection frame 68 extends in the vehicle's width direction, with its two end portions extending downward, to provide an upward projecting substantially U shape. The connection frames 66 and 68 are spaced apart from each other in the vehicle's fore-aft direction, and are connected to each other by the connecting members 70a, 70b. Further, the pair of support frames 64a, 64b have their upper end portions; the connection frame 66 have two side portions; and these portions are connected to each other by the seat rail 72. The seat rail 72 is formed substantially in a C shape extending in a horizontal direction. To the cross member 54, a pair of brackets 74a, 74b are attached side by side in the vehicle's width direction.

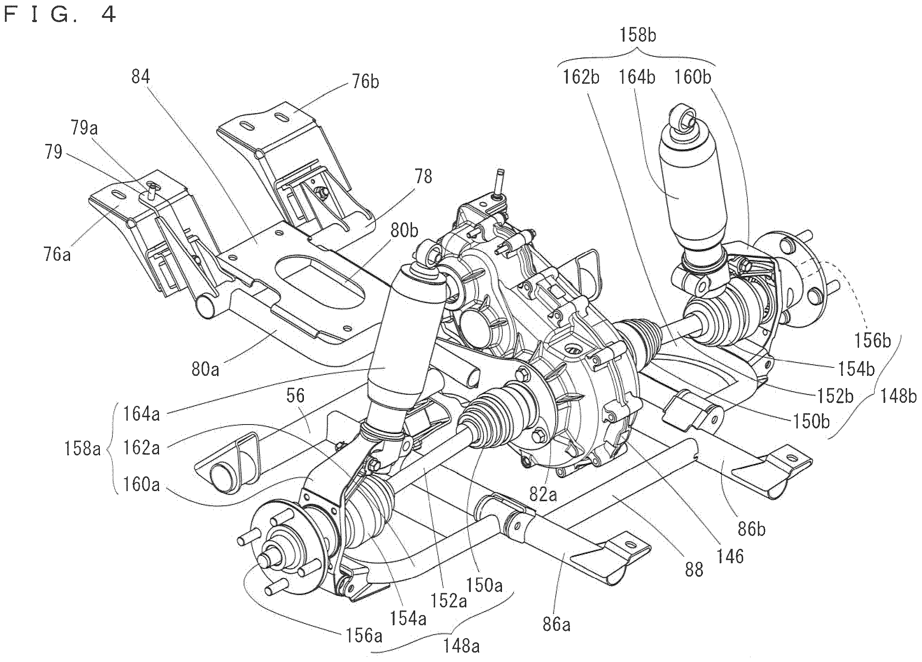

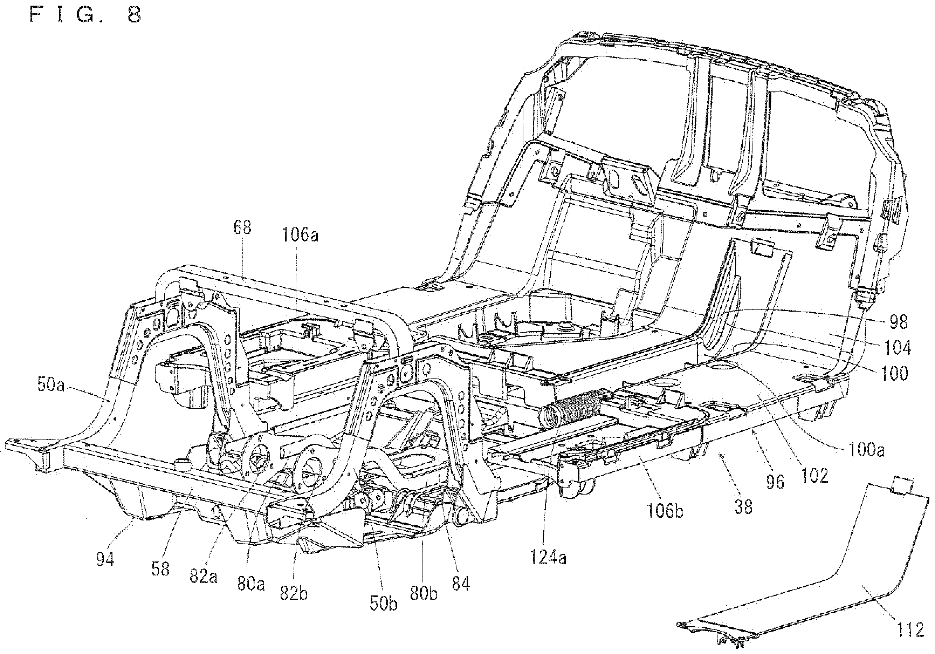

Referring to Fig. 4, a pair of engine brackets 76a, 76b is joined to the pair of brackets 74a, 74b. The engine brackets 76a, 76b are connected to each other via a cross member 78. The cross member 78 is joined to a support frame 79 which extends forward and support frames 80a, 80b which extend rearward. The support frame 79 has its tip portion formed with a projection 79a. The support frames 80a, 80b have their respective rear end portions formed with through-holes 82a, 82b (see Fig. 8). On the cross member 78 and the support frames 80a, 80b, an engine bracket 84 for supporting an engine 114 (which will be described later) is attached. The cross member 78 is joined to the engine brackets 76a, 76b pivotably in an up-down direction. Accordingly, the engine bracket 84 is also pivotable in the up-down direction. The cross member 56 is joined to a pair of frames 86a, 86b which extend rearward. The pair of frames 86a, 86b are connected to each other at regions near their rear end portions, by a cross member 88. The pair of frames 86a, 86b have their rear end portions joined to the cross member 58.

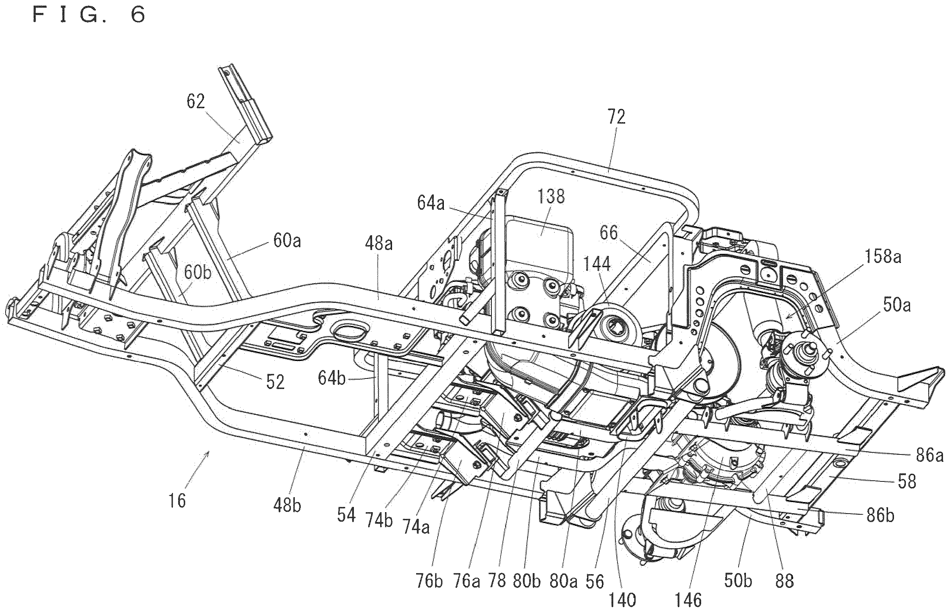

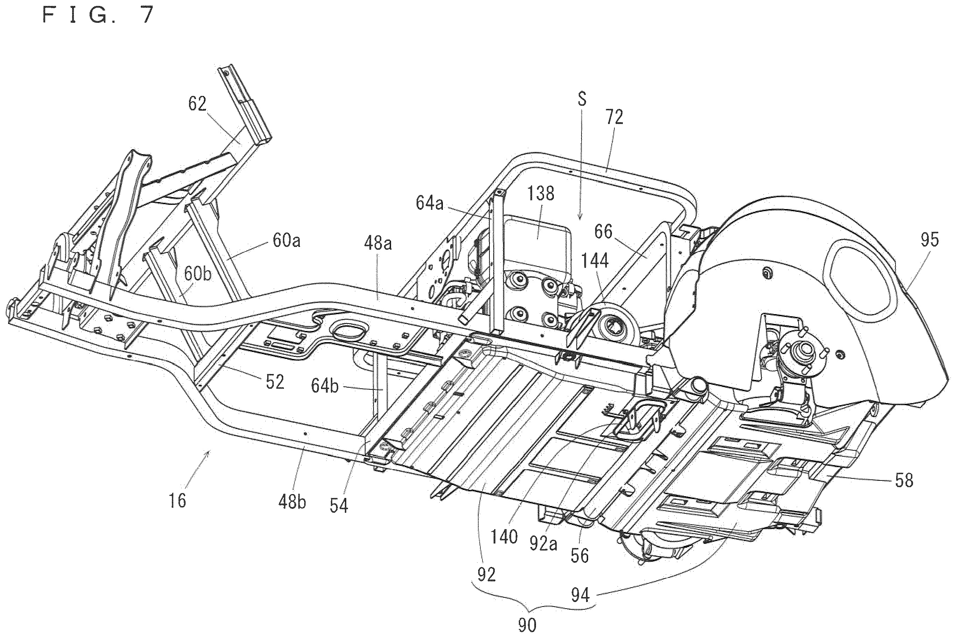

Referring to Fig. 6 and Fig. 7, the frame portion 16 supports an undercover 90. The undercover 90 has a front cover portion 92 and a rear cover portion 94 respectively on its forward and rearward sides. The front cover portion 92 is located between the cross members 54 and 56, and is attached to the pair of front frames 48a and 48b, and to the cross members 54 and 56. The rear cover portion 94 is located between the cross members 56 and 58, and is attached to the cross members 56 and 88, the frames 86a, 86b, and the rear frames 50a, 50b. To the rear frames 50a, 50b, a pair of inner cowls 95 (the inner cowl on the right side is not shown) are attached respectively. The pair of inner cowls 95 is placed between the rear wheels 14a, 14b and the rear fender covers 40a, 40b to cover above the respective rear wheels 14a, 14b.

The undercover 90, the seat portion 18, the body panel 39, a heat insulation board 176 (which will be described later), a fuel tank 168 (which will be described later), the left and the right inner cowls 95 and the rear floor cover 42 define a space as an engine room S. In other words, the engine room S is surrounded by the undercover 90, the seat portion 18, the body panel 39, the heat insulation board 176, the fuel tank 168, the left and the right inner cowls 95 and the rear floor cover 42. In other words, on an under side, an upper side, a front side, a left side, a right side and a rear side of the engine room S, there are provided the undercover 90, the seat portion 18, the body panel 39, the heat insulation board 176 and the left inner cowl 95, the fuel tank 168 and the right inner cowl 95, and the rear floor cover 42, respectively.

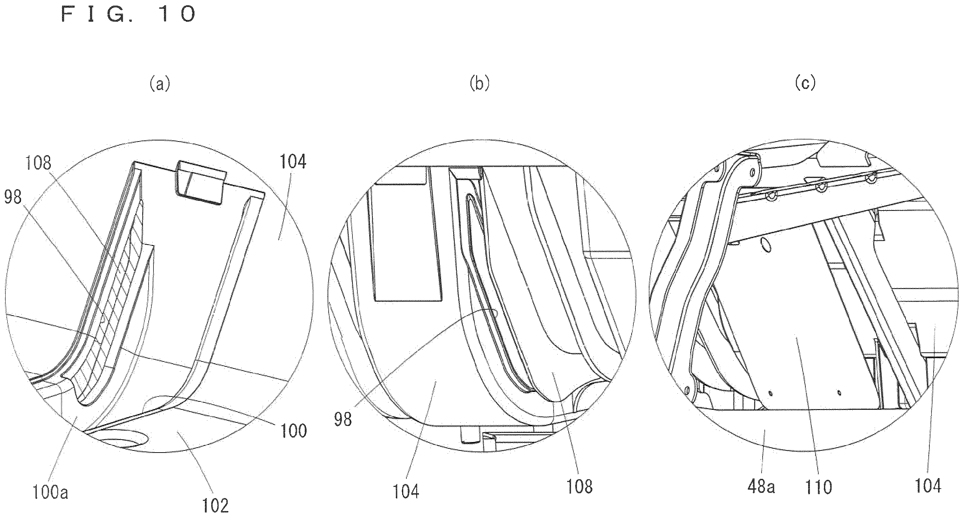

Referring to Fig. 8 and Fig. 9, the floor panel 38 is placed on the front frames 48a, 48b and the cross member 62 of the above-described frame portion 16. The floor panel 38 is placed between the pair of front wheels 12a, 12b and the pair of rear wheels 14a, 14b. The floor panel 38 includes a panel main body 96, an opening 98 and a groove portion 100. The panel main body 96 includes a first panel portion 102 extending substantially horizontally in the fore-aft direction between the front wheels 12a, 12b and the rear wheels 14a, 14b; a second panel portion 104 placed behind the front wheels 12a, 12b and extending upward from a front end region of the first panel portion 102; and third panel portions 106a, 106b extending rearward from left and right rear end regions of the first panel portion 102. The first panel portion 102 is located ahead of the engine room S; the third panel portion 106a is located on the left side of the engine room S; and the third panel portion 106b is located on the right side of the engine room S. Preferably, the second panel portion 104 rises obliquely forward from the front end region of the first panel portion 102. The opening 98 is located at a front region of the panel main body 96, i.e., in the second panel portion 104 (see Fig. 10(a)). Fig. 10(a) shows the opening 98 with hatching. The groove portion 100 communicates with the opening 98 in order to supply external air which is introduced from the opening 98 into a shroud 132 (which will be described later) and into the engine 114, is placed on an upper surface of the panel main body 96, and extends in a fore-aft direction of the panel main body 96. The groove portion 100 is continuous from the second panel portion 104 to the first panel portion 102, provides communication between the opening 98 and the engine room S, and is capable of introducing a running wind from ahead of the golf car 10 to the engine room S. Therefore, it is possible to cool the inside of the engine room S with the running wind which comes from the opening 98 via the groove portion 100. Further, the groove portion 100 is formed on a side closer to a passenger's seat (the other side of the driver's seat) than the center, in the vehicle's width direction. In the present embodiment, the groove portion 100 is formed on a slightly righter side than the center, in the vehicle's width direction. The opening 98 is placed in a side surface 100a of the groove portion 100. Referring to Fig. 10(a) and Fig. 10(b), a platy member 108, which protrudes forward from a reverse surface (front surface) of the second panel portion 104, is provided on a side of the opening 98. Also, referring to Fig. 10(c), a rectangular plate-like cover portion 110, which is supported by the frame portion 16, is provided ahead of the opening 98. Further, the groove portion 100 is covered by a lid portion 112 (see Fig. 8). The lid portion 112 is provided by a strip-like platy member formed to a longitudinal shape of the groove portion 100.

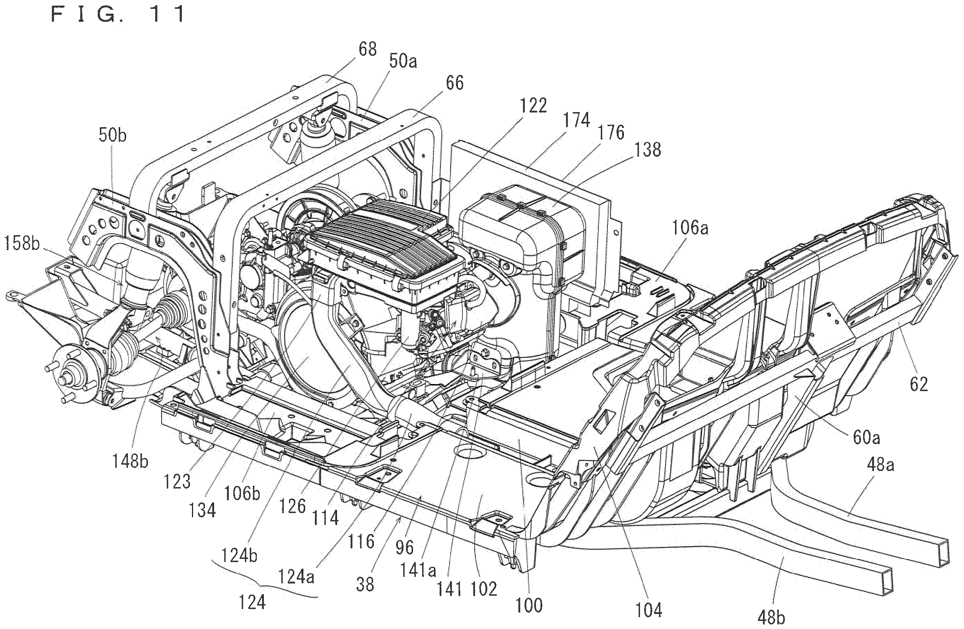

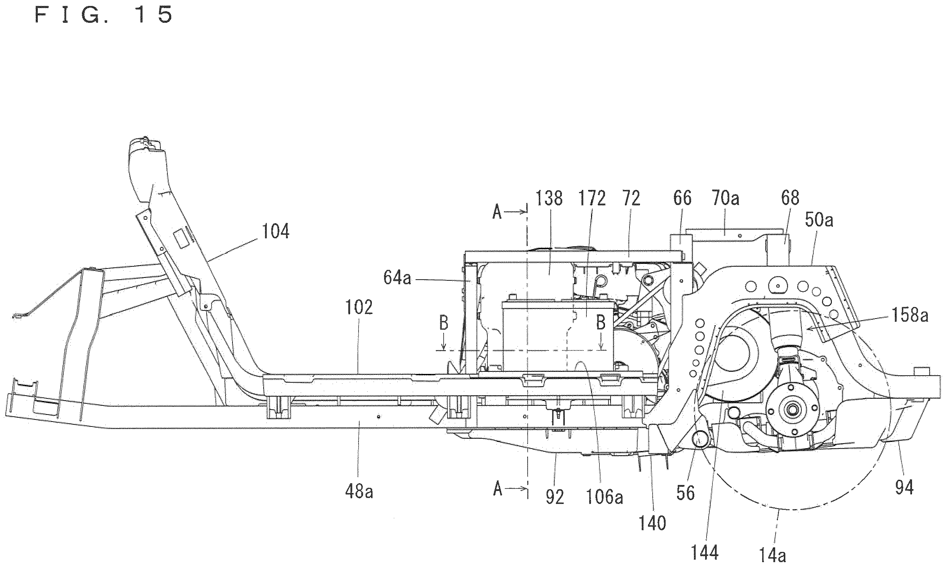

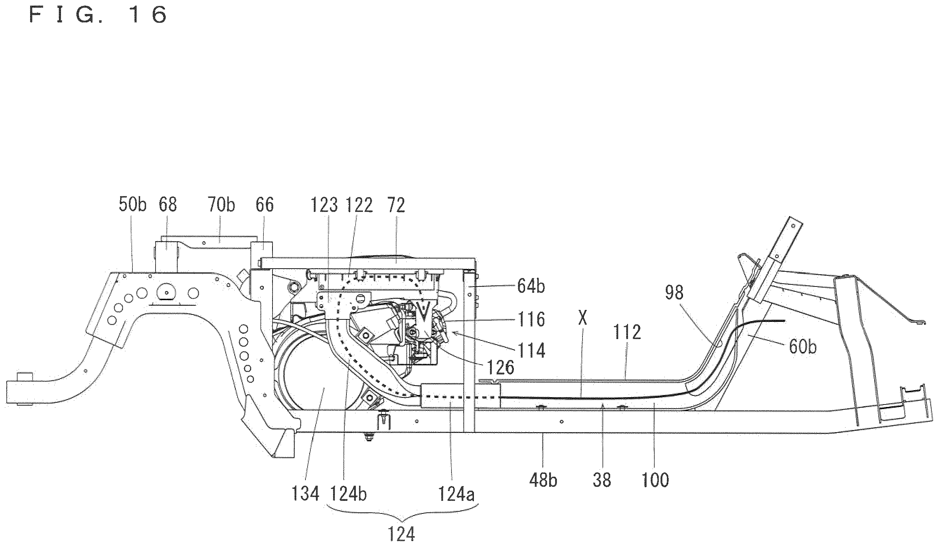

Referring to Fig. 11 through Fig. 17, inside the engine room S, the engine bracket 84 supports the engine 114. The engine 114 is an air-cooled engine which provides a single-cylinder, for example. The engine 114 provides a fuel injection device 115 which injects fuel into an air intake tube 126. The engine 114 is placed behind the first panel portion 102 of the floor panel 38, and includes a cylinder head 116, a cylinder body 118 and a crank case 120. The engine 114 is tilted forward. An air cleaner 122 is provided above the engine 114. The air cleaner 122 is joined to an air intake duct 124 via a joint 123. The air intake duct 124 is located on the right side of the air cleaner 122, and includes a cylindrical front duct 124a and a noise-reducing rear duct 124b of a flattened shape. A rear end portion of the front duct 124a and a front end portion of the rear duct 124b are joined to each other. In order to introduce the external air from the groove portion 100, the front duct 124a is disposed to face the groove portion 100 from the engine room S, and a rear end portion of the rear duct 124b is joined to the joint 123. Thus, the air intake duct 124 and the air cleaner 122 communicate with each other. As indicated by Arrow X in Fig. 16, the external air, which is introduced from ahead and comes through the opening 98 and into the groove portion 100, is then introduced into the air cleaner 122 from the groove portion 100 via the air intake duct 124. Then, after being cleaned by the air cleaner 122, the air is supplied, via the air intake tube 126, into the engine 114. As understood, the air cleaner 122 is provided between the air intake duct 124 and the engine 114. Inside the engine room S, a muffler 128 is provided adjacently on a side (on the left side in the present embodiment) of the engine 114. The engine 114 and the muffler 128 are joined to each other via an exhaust pipe 130. Exhaust gas from the engine 114 is supplied to the muffler 128 via the exhaust pipe 130.

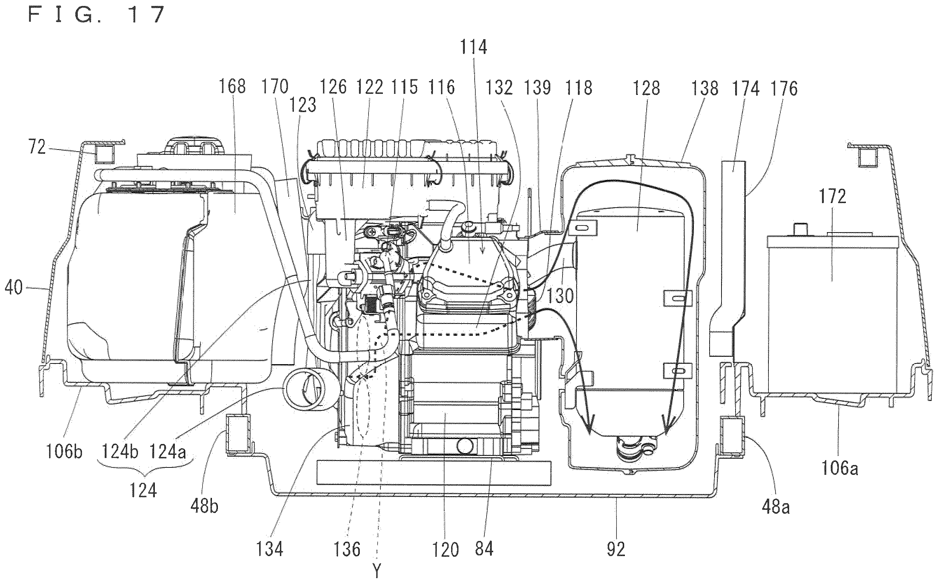

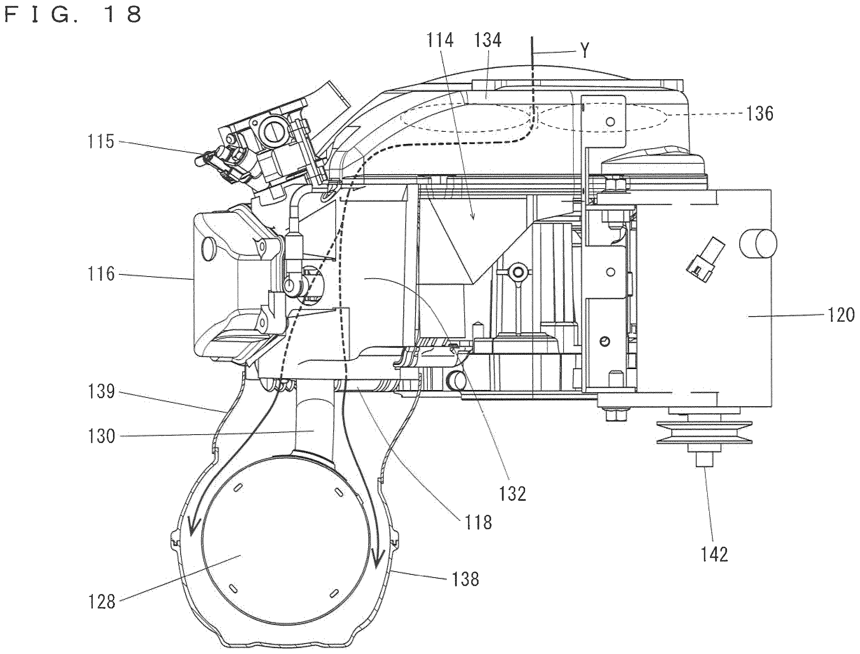

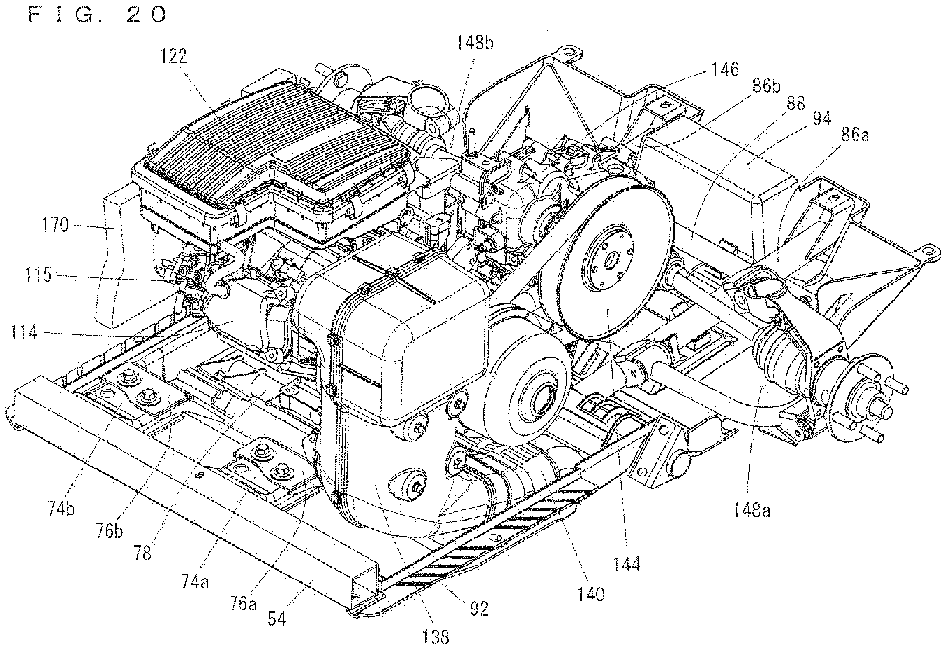

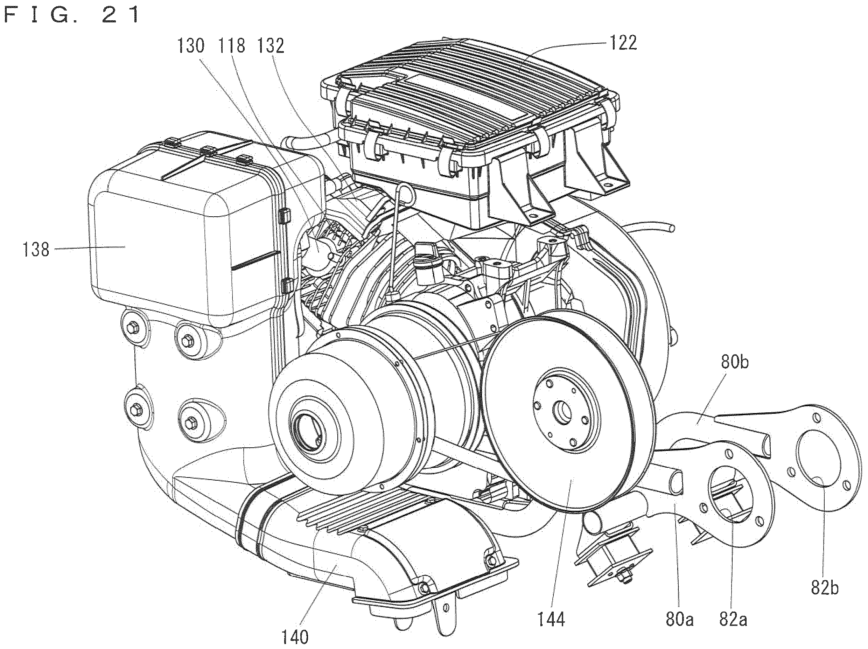

The cylinder body 118 of the engine 114 is covered by the shroud 132, with an air-flowable gap between the cylinder body 118 and the shroud 132. A fan case 134 is provided on a side surface (on the right side surface in the present embodiment) of the engine 114. The shroud 132 and the fan case 134 are connected to each other. Inside the fan case 134, there is provided a fan 136 for supplying the external air from the groove portion 100 into the shroud 132 (between the shroud 132 and the engine 114). The fan 136 is preferably connected to a crank shaft 142 (see Fig. 18) and driven thereby. Also, the muffler 128 is covered by a muffler cover 138 so that an air-flowable gap is formed between the muffler 128 and the muffler cover 138. The muffler cover 138 is made of a resin and provided with an insulation member on its inner surface for example, and is formed to have a generally rectangular tubular upper portion and a generally cylindrical lower portion. The shroud 132 and the muffler cover 138 communicate with each other via a duct 139 which covers the exhaust pipe 130. It should be noted here that Fig. 11, Fig. 12, Fig. 20 and Fig. 21 do not show the duct 139. An exhaust duct 140 is connected to an exit end portion of the muffler cover 138. The exhaust duct 140 has its rear end portion exposed to the outside from an opening 92a of the front cover portion 92 (see Fig. 7 and Fig. 20). The muffler cover 138 is supported by the support frame 79 (see Fig. 4 and Fig. 11), as the projection 79a of the support frame 79 is inserted through a hole 141a of a bracket 141 attached on a side surface of the muffler cover 138. As indicated by Arrow Y in Fig. 17 and Fig. 18, the external air which is introduced into the shroud 132 by the fan 136 flows between the shroud 132 and the engine 114 (the cylinder body 118), into the muffler cover 138 (between the muffler cover 138 and the muffler 128), and serves as a cooling wind to cool the engine 114 and the muffler 128. Then, the air inside the muffler cover 138 flows through the exhaust duct 140 and is discharged from the opening 92a of the front cover portion 92 to the outside below the engine room S.

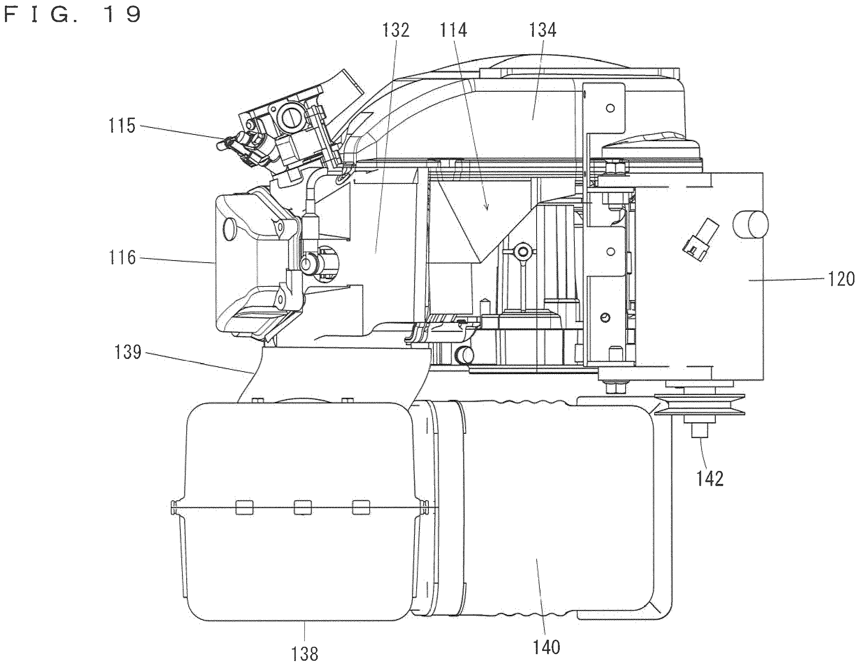

Referring also to Fig. 18 through Fig. 21, an output from the crank shaft 142 of the engine 114 is transmitted via the CVT 144 to the transmission 146. The CVT 144 is located behind the muffler 128, whereas the transmission 146 is located behind the engine 114, between the pair of rear wheels 14a, 14b.

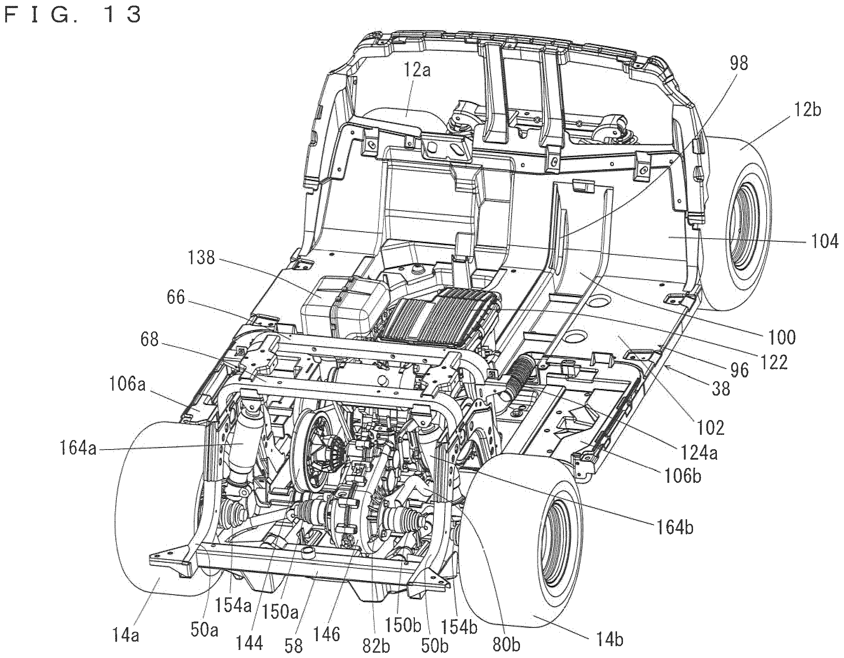

Referring also to Fig. 4, the transmission 146 is joined to a pair of rotation transmission portions 148a, 148b. The rotation transmission portion 148a extends to the left of the transmission 146, and includes a constant-velocity joint 150a, a drive shaft 152a, a constant-velocity joint 154a and an axle 156a. The transmission 146 has its output shaft (not illustrated) connected to the drive shaft 152a by the constant-velocity joint 150a, whereas the drive shaft 152a and the axle 156a are connected to each other by the constant-velocity joint 154a. The rotation transmission portion 148b extends to the right of the transmission 146, and includes a constant-velocity joint 150b, a drive shaft 152b, a constant-velocity joint 154b and an axle 156b. The transmission 146 has its output shaft connected to the drive shaft 152b by the constant-velocity joint 150b, whereas the drive shaft 152b and the axle 156b are connected to each other by the constant-velocity joint 154b. The axle 156a supports the rear wheel 14a, whereas the axle 156b supports the rear wheel 14b. It should be noted here that the through-hole 82a at the rear end portion of the support frame 80a is penetrated by the output shaft of the transmission 146 between the transmission 146 and the constant-velocity joint 150a, whereas the through-hole 82b at the rear end portion of the support frame 80b is penetrated by the output shaft of the transmission 146 between the transmission 146 and the constant-velocity joint 150b (see Fig. 13).

Also, the pair of rear wheels 14a, 14b is suspended by a pair of suspensions 158a, 158b. In the present embodiment, the pair of suspensions 158a, 158b is provided by independent suspension systems. The pair of suspensions 158a, 158b includes knuckles 160a, 160b, arms 162a, 162b and shock absorbers 164a, 164b respectively. The knuckle 160a supports the axle 156a rotatably. The arm 162a connects a lower portion of the knuckle 160a and the frame 86a to each other. The shock absorber 164a has a lower end portion and an upper end portion, respectively joined to an upper end portion of the knuckle 160a and to the connection frame 68. Likewise, the knuckle 160b supports the axle 156b rotatably. The arm 162b connects a lower portion of the knuckle 160b and the frame 86b to each other. The shock absorber 164b has a lower end portion and an upper end portion, respectively joined to an upper end portion of the knuckle 160b and to the connection frame 68.

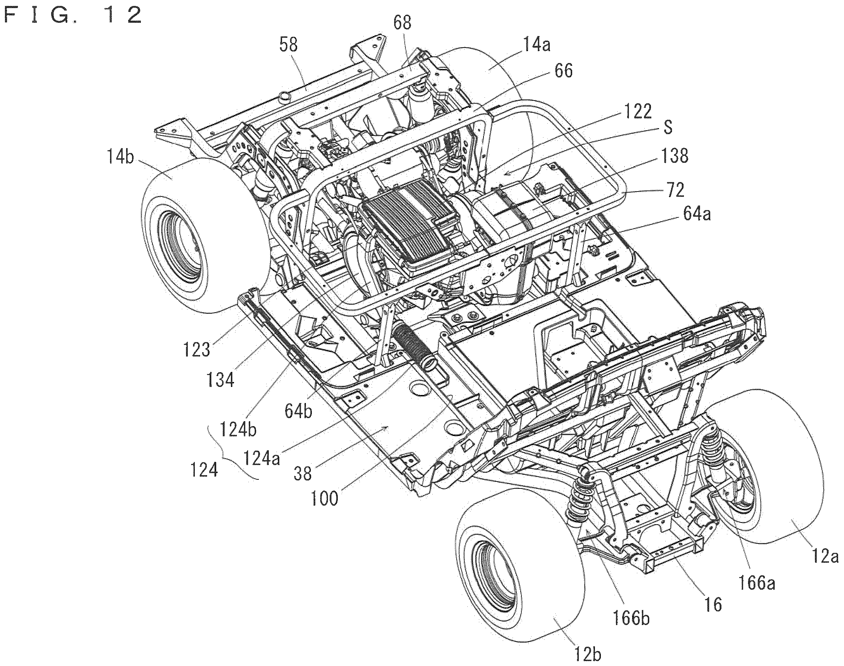

Referring to Fig. 12, the pair of front wheels 12a, 12b are suspended by a pair of suspensions 166a, 166b attached to the front region of the frame portion 16. In the present embodiment, the pair of suspensions 166a, 166b are provided by independent suspension systems.

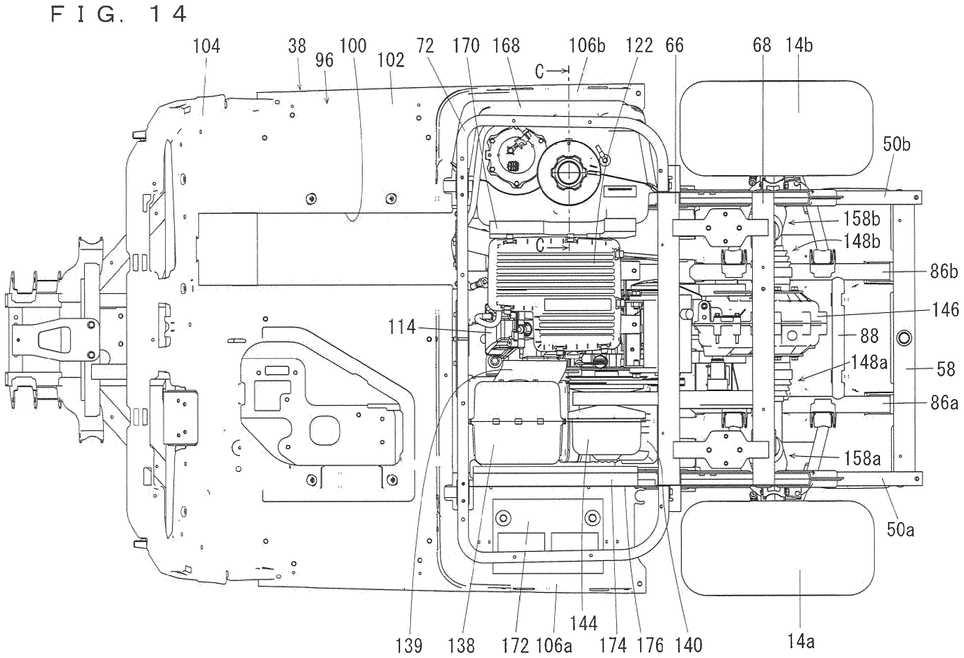

Referring to Fig. 14 and Fig. 17, the fuel tank 168 is placed on the right side of the engine 114 and on the third panel portion 106b of the floor panel 38. Between the engine 114 and the fuel tank 168, a sound absorbing member 170 is erected and attached to a side surface of the fuel tank 168. Also, a battery 172 is placed on the left of the muffler cover 138 and on the third panel portion 106a of the floor panel 38. Between the muffler cover 138 and the battery 172, a two-ply structure made of a sound absorbing member 174 and the heat insulation board 176 is erected. It is possible, with the sound absorbing members 170 and 174, to absorb noise from the engine room S, whereas it is also possible, with the heat insulation board 176, to reduce heat to conduct from the engine room S to the battery 172.

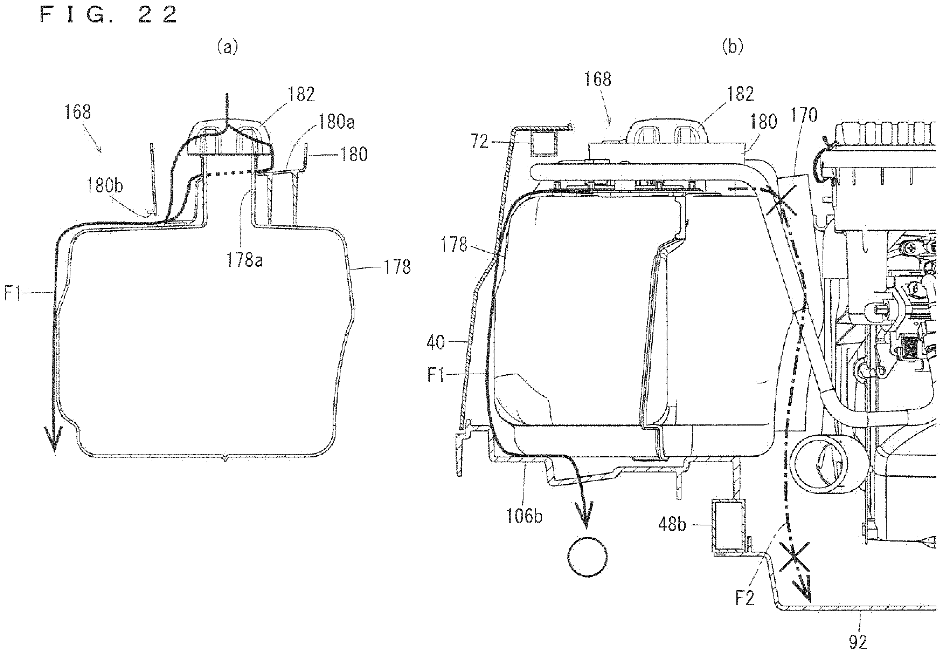

Referring to Fig. 22, the fuel tank 168 includes a tank main body 178; a fuel catch 180 which is fitted around a neck portion 178a of the tank main body 178 to surround the neck portion 178a; and a cap 182 which is attached to an upper end region of the neck portion 178a. The fuel catch 180 includes a bottom surface 180a which is slanted to become outwardly lower in the vehicle's width direction, and an opening 180b which is located on an outer side in the vehicle's width direction.

According to the fuel tank 168 as described, it is possible to catch spilled fuel with the fuel catch 180 at a time of fueling. The fuel caught in the fuel catch 180 comes out of the opening 180b, flows along an outer side surface of the tank main body 178, then along the third panel portion 106b, and then is discharged outside. Therefore, it is possible with this arrangement to prevent spilled fuel from soaking into the sound absorbing member 170 or staying on the undercover 90 (particularly on the front cover portion 92). In other words, spilled fuel flows as indicated by Arrow F1 in Fig. 22(a) and Fig. 22(b), but does not flow as indicated by Arrow F2 in Fig. 22(b). It should be noted here that as another arrangement, the fuel catch 180 may be provided with a discharge pipe for discharging the fuel from the fuel catch 180 through the discharge pipe to the outside.

According to the golf car 10 as has been described, external air is introduced from the opening 98 of the panel main body 96, flows through the groove portion 100 which serves as an external air introducing path, and then is supplied to the inside of the shroud 132. In this arrangement, the opening 98 and the groove portion 100 are formed in the panel main body 96 of the floor panel 38; in other words, the floor panel 38 itself has an external air introducing path. Therefore, there is no need for preparing a separate external air introducing path provided by an individual member separate from the floor panel 38. Also, the groove portion 100 is made by forming the floor panel 38 so that the panel main body 96 has a downward recess in its upper surface; i.e., so that the recess opens in the upper surface, not in the lower surface. Since the floor panel 38 itself protects members which are placed thereabove, there is no need for protection members to protect the external air introducing path (the groove portion 100) below the groove portion 100. Therefore, it is possible to introduce external air with a reduced number of parts.

By making the opening 98 in the second panel portion 104 which is formed to rise upward, it becomes possible to efficiently introduce running wind as the external air from ahead of the golf car 10 into the groove portion 100.

By covering the groove portion 100 with the lid portion 112, it becomes possible to introduce the external air which flows through the groove portion 100, more reliably toward the rear, thereby supplying the air easily into the shroud 132.

Since the opening 98 is made in the side surface 100a of the groove portion 100, it is possible to reduce the entry of mud, sand, stones and other foreign matter into the opening 98 and then into the groove portion 100 when they come flying from ahead of the golf car 10 to the front face of the floor panel 38.

By providing the cover portion 110 ahead of the opening 98, it is possible to further reduce the entry of mud, sand, stones and other foreign matter into the opening 98 and then into the groove portion 100 when they come flying from ahead of the golf car 10 to the front face of the floor panel 38.

The external air from the groove portion 100 is supplied into the shroud 132 efficiently and smoothly by the fan 136.

By positioning the muffler 128 next to the engine 114, it becomes possible to shorten the length of the exhaust pipe 130 which allows exhaust gas to move from the engine 114 to the muffler 128. Further, by connecting the muffler cover 138, which covers the muffler 128, to the shroud 132, the arrangement allows the external air to flow through the groove portion 100 to reach also the inside of the muffler cover 138. Therefore, it is possible to cool not only the engine 114 but also the muffler 128.

Since the external air which flows through the groove portion 100 is supplied not only into the shroud 132 but also into the engine 114, there is no need for separately providing an air intake path for supplying air into the engine 114.

By positioning the air intake duct 124 to face the groove portion 100, external air from the groove portion 100 is introduced to the air cleaner 122 efficiently via the air intake duct 124, and after being cleaned by the air cleaner 122, the external air is supplied smoothly into the engine 114.

In the embodiment described thus far, description was made for a case where the present invention is applied to a golf car. However, the present invention is not limited to this. The present invention is applicable to any other vehicles.

The present invention being thus far described in terms of preferred embodiments, it is obvious that these may be varied in many ways within the scope of the present invention. The scope of the present invention is only limited by the accompanied claims.

### REFERENCE SIGNS LIST

- 10: Golf car
- 12a, 12b: Front wheels
- 14a, 14b: Rear wheels
- 16: Frame portion
- 38: Floor panel
- 96: Panel main body
- 92a, 98, 180b: Openings
- 100: Groove portion
- 100a: Groove portion side surface
- 102: First panel portion
- 104: Second panel portion
- 110: Cover portion
- 112: Lid portion
- 114: Engine
- 118: Cylinder body
- 122: Air cleaner
- 124: Air intake duct

- 128: Muffler
- 132: Shroud
- 136: Fan
- 138: Muffler cover

## Claims

1. A vehicle (10) comprising:
a front wheel (12a, 12b);
a rear wheel (14a, 14b) provided at a more rearward position than the front wheel (12a, 12b);
a floor panel (38) provided between the front wheel (12a, 12b) and the rear wheel (14a, 14b);
an engine (114) including a cylinder body (118), and provided at a rearward position of the floor panel (38); and
a shroud (132) covering the cylinder body (118);
wherein the floor panel (38) includes: a panel main body (96); an opening (98) provided at a front portion of the panel main body (96);
**characterized in that**
a groove portion (100) provided in an upper surface of the panel main body (96) so as to communicate with the opening (98) and extend in a fore-aft direction of the panel main body (96) for supplying external air from the opening (98) into the shroud (132);
wherein the groove portion (100) is made by forming the floor panel (38) so that the panel main body (96) has a downward recess in its upper surface, so that the recess opens in the upper surface of the panel main body (96), not in the lower surface.

2. The vehicle (10) according to Claim 1, wherein
the panel main body (96) includes a first panel portion (102) extending in the fore-aft direction between the front wheel (12a, 12b) and the rear wheel (14a, 14b); and a second panel portion (104) located behind the front wheel (12a, 12b) and extending upward from a front end region of the first panel portion (102);
the opening (98) is located in the second panel portion (104); and
the groove portion (100) communicates with the opening (98) and is continuous from the second panel portion (104) to the first panel portion (102).

3. The vehicle (10) according to Claim 1 or 2, further comprising a lid portion (112) which covers the groove portion (100) .

4. The vehicle (10) according to one of Claims 1 through 3, wherein the groove portion (100) has a side surface (100a) provided with the opening (98).

5. The vehicle (10) according to one of Claims 1 through 4, further comprising a cover portion (110) provided ahead of the opening (98).

6. The vehicle (10) according to one of Claims 1 through 5, further comprising a fan (136) configured to supply the external air from the groove portion (100) into the shroud (132) .

7. The vehicle (10) according to one of Claims 1 through 6, further comprising:
a muffler (128) supplied with exhaust gas from the engine (114); and
a muffler cover (138) which covers the muffler (128) and communicates with the shroud (132);
wherein the muffler (128) is located adjacent to the engine (114) .

8. The vehicle (10) according to one of Claims 1 through 7, wherein the groove portion (100) is configured to supply the external air also into the engine (114).

9. The vehicle (10) according to Claim 8, further comprising:
an air intake duct (124) that faces the groove portion (100) for introduction of the external air from the groove portion (100) ; and an air cleaner (122) provided between the air intake duct (124) and the engine (114) for cleaning the external air from the air intake duct (124) before supplying into the engine (114) .

## Patentansprüche

1. Ein Fahrzeug (10), das folgende Merkmale aufweist:
ein Vorderrad (12a, 12b);
ein Hinterrad (14a, 14b), das an einer weiter hinten gelegenen Position als das Vorderrad (12a, 12b) bereitgestellt ist;
ein Bodenblech (38), das zwischen dem Vorderrad (12a, 12b) und dem Hinterrad (14a, 14b) bereitgestellt ist;
einen Motor (114), der einen Zylinderkörper (118) umfasst und an einer hinteren Position des Bodenblechs (38) bereitgestellt ist; und
eine Ummantelung (132), die den Zylinderkörper (118) bedeckt;
wobei das Bodenblech (38) Folgendes umfasst: einen Blechhauptkörper (96); eine Öffnung (98), die an einem vorderen Abschnitt des Blechhauptkörpers (96) bereitgestellt ist;
**dadurch gekennzeichnet, dass**
ein Rillenabschnitt (100) in einer oberen Oberfläche des Blechhauptkörpers (96) bereitgestellt ist, um mit der Öffnung (98) in Verbindung zu stehen und sich in einer Vor-Zurück-Richtung des Blechhauptkörpers (96) zu erstrecken, um Außenluft von der Öffnung (98) in die Ummantelung (132) zuzuführen;
wobei der Rillenabschnitt (100) durch Bilden des Bodenblechs (38) hergestellt wird, so dass der Blechhauptkörper (96) eine nach unten gerichtete Ausnehmung in der oberen Oberfläche desselben aufweist, so dass die Ausnehmung sich in der oberen Oberfläche des Blechhauptkörpers (96), nicht in der unteren Oberfläche öffnet.

2. Das Fahrzeug (10) gemäß Anspruch 1, wobei
der Blechhauptkörper (96) einen ersten Blechabschnitt (102) umfasst, der sich in der Vor-Zurück-Richtung zwischen dem Vorderrad (12a, 12b) und dem Hinterrad (14a, 14b) erstreckt; und einen zweiten Blechabschnitt (104) umfasst, der sich hinter dem Vorderrad (12a, 12b) befindet und sich von einem vorderen Endbereich des ersten Blechabschnitts (102) nach oben erstreckt;
die Öffnung (98) sich in dem zweiten Blechabschnitt (104) befindet; und
der Rillenabschnitt (100) mit der Öffnung (98) in Verbindung steht und von dem zweiten Blechabschnitt (104) zu dem ersten Blechabschnitt (102) durchgehend ist.

3. Das Fahrzeug (10) gemäß Anspruch 1 oder 2, das ferner einen Deckelabschnitt (112) aufweist, der den Rillenabschnitt (100) bedeckt.

4. Das Fahrzeug (10) gemäß einem der Ansprüche 1 bis 3, wobei der Rillenabschnitt (100) eine Seitenoberfläche (100a) aufweist, die mit der Öffnung (98) versehen ist.

5. Das Fahrzeug (10) gemäß einem der Ansprüche 1 bis 4, das ferner einen Abdeckungsabschnitt (110) aufweist, der vor der Öffnung (98) bereitgestellt ist.

6. Das Fahrzeug (10) gemäß einem der Ansprüche 1 bis 5, das ferner einen Lüfter (136) aufweist, das dazu konfiguriert ist, die Außenluft von dem Rillenabschnitt (100) in die Ummantelung (132) zuzuführen.

7. Das Fahrzeug (10) gemäß einem der Ansprüche 1 bis 6, das ferner folgende Merkmale aufweist:
einen Schalldämpfer (128), dem von dem Motor (114) Abgas zugeführt wird; und
eine Schalldämpferabdeckung (138), die den Schalldämpfer (128) bedeckt und mit der Ummantelung (132) in Verbindung steht;
wobei der Schalldämpfer (128) an den Motor (114) angrenzt.

8. Das Fahrzeug (10) gemäß einem der Ansprüche 1 bis 7, wobei der Rillenabschnitt (100) dazu konfiguriert ist, die Außenluft auch in den Motor (114) zuzuführen.

9. Das Fahrzeug (10) gemäß Anspruch 8, das ferner folgendes Merkmal aufweist:
einen Lufteinlasskanal (124), der dem Rillenabschnitt (100) zugewandt ist, um die Außenluft von dem Rillenabschnitt (100) einzuführen; und einen Luftreiniger (122), der zwischen dem Lufteinlasskanal (124) und dem Motor (114) bereitgestellt ist, um die Außenluft von dem Lufteinlasskanal (124) zu reinigen, bevor dieselbe dem Motor (114) zugeführt wird.

## Revendications

1. Véhicule (10) comprenant:
une roue avant (12a, 12b);
une roue arrière (14a, 14b) prévue à une position plus en arrière que la roue avant (12a, 12b);
un panneau de plancher (38) prévu entre la roue avant (12a, 12b) et la roue arrière (14a, 14b);
un moteur (114) comportant un corps de cylindre (118) et prévu à une position arrière du panneau de plancher (38); et
un hauban (132) recouvrant le corps de cylindre (118);
dans lequel le panneau de plancher (38) comporte: un corps principal de panneau (96); une ouverture (98) prévue au niveau d'une partie avant du corps principal de panneau (96);
**caractérisé par le fait que**
une partie de rainure (100) prévue dans une surface supérieure du corps principal de panneau (96) de manière à communiquer avec l'ouverture (98) et à s'étendre dans une direction avant-arrière du corps principal de panneau (96) pour alimenter de l'air extérieur de l'ouverture (98) vers le hauban (132);
dans lequel la partie de rainure (100) est réalisée en formant le panneau de plancher (38) de sorte que le corps principal de panneau (96) présente un évidement vers le bas dans sa surface supérieure, de sorte que l'évidement s'ouvre dans la surface supérieure du corps principal de panneau (96), et pas dans la surface inférieure.

2. Véhicule (10) selon la revendication 1, dans lequel
le corps principal de panneau (96) comporte une première partie de panneau (102) s'étendant dans la direction avant-arrière entre la roue avant (12a, 12b) et la roue arrière (14a, 14b); et une deuxième partie de panneau (104) située derrière la roue avant (12a, 12b) et s'étendant vers le haut à partir d'une région d'extrémité avant de la première partie de panneau (102);
l'ouverture (98) est située dans la deuxième partie de panneau (104); et
la partie de rainure (100) communique avec l'ouverture (98) et est continue de la deuxième partie de panneau (104) à la première partie de panneau (102).

3. Véhicule (10) selon la revendication 1 ou 2, comprenant par ailleurs une partie de couvercle (112) qui recouvre la partie de rainure (100).

4. Véhicule (10) selon l'une des revendications 1 à 3, dans lequel la partie de rainure (100) présente une surface latérale (100a) pourvue de l'ouverture (98).

5. Véhicule (10) selon l'une des revendications 1 à 4, comprenant par ailleurs une partie de couvercle (110) prévue en avant de l'ouverture (98).

6. Véhicule (10) selon l'une des revendications 1 à 5, comprenant par ailleurs un ventilateur (136) configuré pour alimenter l'air extérieur de la partie de rainure (100) dans le hauban (132).

7. Véhicule (10) selon l'une des revendications 1 à 6, comprenant par ailleurs:
un silencieux (128) alimenté en gaz d'échappement du moteur (114); et
un couvercle de silencieux (138) qui recouvre le silencieux (128) et communique avec le hauban (132);
dans lequel le silencieux (128) est situé adjacent au moteur (114).

8. Véhicule (10) selon l'une des revendications 1 à 7, dans lequel la partie de rainure (100) est configurée pour alimenter l'air extérieur également vers le moteur (114).

9. Véhicule (10) selon la revendication 8, comprenant par ailleurs:
un conduit d'admission d'air (124) qui fait face à la partie de rainure (100), destiné à l'introduction de l'air extérieur depuis la partie de rainure (100); et un purificateur d'air (122) prévu entre le conduit d'admission d'air (124) et le moteur (114), destiné à nettoyer l'air extérieur venant du conduit d'admission d'air (124) avant de l'alimenter vers le moteur (114).
